# EUROPÄISCHE PATENTANMELDUNG

(11) **EP 2 671 754 A1**
(43) Veröffentlichungstag der Anmeldung: **11.12.2013**
(21) Anmeldenummer: 12171354.9
(22) Anmeldetag: 08.06.2012
(51) Int. Cl.: B60P 7/08

(54) **Ladungssicherungssystem**

(71) Anmelder: Bühler, Leo, 8820 Wädenswil (CH)
(72) Erfinder: Bühler, Leo, 8820 Wädenswil (CH)
(74) Vertreter: Patentbüro Paul Rosenich AG

(57) **Zusammenfassung**

Ein Ladungssicherungssystem umfasst einen Zurrgurt (1) und eine Ratschenvorrichtung (2) zum Spannen des Zurrgurtes (1) mit zwei gegeneinander um eine den zu spannenden Zurrgurt (1) aufnehmende, in einer Drehrichtung sperrbare erste Achse (6) verschwenkbaren Schenkeln (3, 4). Einer der Schenkel (4) ist gegenüber dem anderen Schenkel (3) verlängert ausgeführt. Am Ende des verlängerten Schenkels (4) ist eine mittels einer Kurbel (7) drehbare zweite Achse (8) zum Aufwickeln des Zurrgurtes (1) vorgesehen. Der Zurrgurt (1) ist mit einem Ende unverlierbar an der zweiten Achse (8) des verlängerten Schenkels (4) festgelegt.

## Beschreibung

Die Erfindung betrifft ein Ladungssicherungssystem umfassend zumindest einen Zurrgurt und eine Ratschenvorrichtung zum Spannen des Zurrgurtes nach dem Oberbegriff des Anspruchs 1.

Bei diesen Ladungssicherungssystemen wird der Zurrgurt mittels der Ratschenvorrichtung dadurch gespannt, dass er durch gegenseitiges Verschwenken zumindest eines der beiden Schenkeln der Ratschenvorrichtung auf eine Achse aufgerollt wird, die in einer Richtung beim Verschwenken der Schenkel gedreht und beim gegensinnigen Verschwenken der Schenkel gesperrt gehalten wird.

Die Zurrgurten herkömmlicher Systeme müssen nach dem Gebrauch mühsam aufgewickelt werden, um eine ordnungsgemässe Lagerung ohne eine Beschädigung des Zurrgurtes zu gewährleisten. Beispielsweise wird für den Verkauf der Zurrgurt mit einer Klammer an der Ratschenvorrichtung fixiert, um ein unbeabsichtigtes Abwickeln des Zurrgurtes zu verhindern. Dabei können jedoch oftmals Beschädigungen des Zurrgurtes auftreten, welche die maximale Zugkraft des Zurrgurtes wesentlich reduzieren.

Auf dem Markt werden auch Systeme angeboten, bei welchen Zurrgurte mittels Rotationsfedern nach dem Gebrauch automatisch aufgerollt werden. Derartige Systeme müssen aufgrund des Federmechanismus gross und schwer gebaut werden. Daher sind diese sehr unhandlich oder oftmals nur als feste Einrichtung z. B. an einem Fahrzeug einsetzbar. Zudem ist auch die maximale Länge derartiger Zurrgurte begrenzt, da diese Länge durch den von dem Federmechanismus gebotenen Platz bestimmt ist. Ebenso begrenzt ist die Breite der Zurrgurte derartiger Systeme aufgrund der konstruktionsbedingt maximal möglichen Federkräfte.

Bekannt sind auch autonome Aufwickelvorrichtungen für Zurrgurte, im Speziellen für Lastwagenfahrer, welche jedoch oftmals nicht zur Hand sind, wenn sie benötigt werden. Diese Vorrichtungen haben eine mittels einer Handkurbel betätigbare Achse, an welcher vor dem Aufwickeln meist mühsam ein Ende des Zurrgurtes temporär festgemacht wird. Derartige Aufwickelvorrichtungen können auch beispielsweise mittels einer Schraubverbindung mit einem der Schenkel einer Ratschenvorrichtung für einen Zurrgurt verbunden werden. Dies macht die gesamte Anordnung jedoch schwer und unhandlich. Bei Varianten dieser Anordnung mit an der Schraube befestigtem Ende des Zurrgurtes ist zusätzlich das Spannen sehr umständlich.

Weitere derzeit auf dem Markt bekannte Ladungssicherungssysteme weisen einen gegenüber dem anderen Schenkel verlängert ausgeführten Schenkel an der Ratschenvorrichtung auf, an dessen Ende eine mittels einer Kurbel drehbare Aufwickelachse zur Aufnahme des Zurrgurtes vorgesehen ist. Zum Aufwickeln des Zurrgurtes wird eines seiner Enden an der drehbaren Achse temporär festgelegt und mittels der Kurbel aufgewickelt. Nach dem Aufwickeln wird die Aufwickelachse herausgezogen und der aufgewickelten Zurrgurt vom Schenkel der Ratschenvorrichtung entfernt. Nachteilig an dieser Lösung sind die mehreren Teile dieses Ladungssicherungssystems, welche bei Gebrauch verloren gehen können, sowie der erhöhte Aufwand beim Gebrauch. Zudem können aus Versehen Zurrgurte angeordnet werden, welche eine geringere als vom Anwender angenommene Zugkraft aufweisen, was zu ungenügend gesicherten Ladungen führen kann.

Aufgabe der vorliegenden Erfindung ist es somit, ein Ladungssicherungssystem derart auszuführen, dass die vorgenannten Nachteile nicht aufweist und insbesondere bei einfacher Handhabung und hoher Stabilität dennoch möglichst kompakt und leicht gebaut ist.

Die Aufgabe wird durch die Merkmale des unabhängigen Anspruchs gelöst. Vorteilhafte Weiterbildungen sind in den Figuren und in den abhängigen Patentansprüchen dargelegt.

Gemäss der Erfindung ist der Zurrgurt mit einem Ende unverlierbar an der zweiten Achse am verlängerten Schenkels festgelegt.

Damit ist bei einfacher Handhabung die sichere und stabile Verbindung von Zurrgurt und Ratschenvorrichtung sichergestellt. Es wird nur so viel vom Zurrgurt abgewickelt, wie für den Verspannvorgang beziehungsweise für die Sicherung der Ladung erforderlich ist. Durch die unverlierbare Befestigung, beispielsweise mittels einer mechanischen oder adhäsiven Verbindung zwischen dem Zurrgurt und der zweiten Achse, ist eine Verwechslungsgefahr ausgeschlossen. Zudem werden bei kompakten Abmessungen Beschädigungen des Zurrgurtes gegenüber den bekannten Lösungen massgeblich reduziert.

Vorzugsweise besteht die zweite Achse aus zwei parallelen Bolzen, welche um eine gemeinsame zwischen diesen verlaufende Drehachse drehbar sind, wobei der Zurrgurt an einem der Bolzen befestigt ist. Diese Ausgestaltung der zweiten Achse ermöglicht ein einfaches Aufwickeln auch von Zurrgurten aus einem steifen Material. Zudem wird eine im verspannten Zustand des Zurrgurtes auf die zweite Achse wirkende Zugkraft auf die beiden Bolzen übertragen, wobei der Bolzen, an dem das Ende des Zurrgurtes nicht festgelegt ist, für eine Reduktion der Belastung aufgrund dieser Zugkraft auf den Bolzen sorgt, an welchem der Zurrgurt festgelegt ist.

In einer alternativen Ausführungsform ist die zweite Achse als Vollbolzen mit einer Ausnehmung oder einem Schlitz ausgebildet, wobei das an der zweiten Welle fest angeordnete Ende des Zurrgurtes in dieser Ausnehmung beziehungsweise an oder in diesem Schlitz festgelegt wird.

In einer weiteren alternativen Ausführungsform ist die zweite Achse als Hohlbolzen mit einer Ausnehmung oder einem Schlitz ausgebildet, wobei das an der zweiten Welle fest angeordnete Ende des Zurrgurtes in dieser Ausnehmung beziehungsweise an oder in diesem Schlitz festgelegt wird.

Des Weiteren werden durch diese Ausgestaltungen der zweiten Achse in dem verlängerten Schenkel grössere Übertragungsflächen geschaffen, über welche die auf den Zurrgurt wirkende Zugkraft auf den entsprechenden Schenkel der Ratschenvorrichtung als bei einer zweiten Achse mit nur einem

Bolzen übertragbar ist. Dadurch kann bei geringen Materialquerschnitten und damit leichter Bauweise eine hohe Belastbarkeit des Ladungssicherungssystems gewährleistet werden.

Vorteilhaft ist der Zurrgurt mit einer Schlaufe an einem der Bolzen befestigt, was eine einfache Festlegung des Zurrgurtes und eine vorteilhafte Kraftübertragung von demselben auf die Ratschenvorrichtung ermöglicht.

Vorzugsweise ist eine Arretiereinrichtung zur Arretierung der zweiten Achse vorgesehen, so dass ein nicht vollständig abgewickelter Zurrgurt trotzdem verspannbar ist. Die Arretiereinrichtung wirkt vorteilhaft einzig auf die zweite Achse, so dass eine Beschädigung des Zurrgurtes ausgeschlossen ist. Die Arretiereinrichtung umfasst beispielsweise einen Bolzen, einen Splint oder Klemmeinrichtung, welche direkt oder indirekt auf die zweite Achse einwirkt und diese vorteilhaft drehfest fixiert.

Bevorzugt ist der verlängerte Schenkel der Ratschenvorrichtung zumindest zwischen der sperrbaren Achse und der zweiten Achse einstückig ausgeführt, so dass dieser Schenkel und somit die Ratschenvorrichtung einfach herstellbar ist. Zudem weist ein derart ausgebildeter Schenkel eine bessere Steifigkeit als ein mehrteilig ausgebildeter Schenkel auf, so dass infolge dessen das Ladungssicherungssystem vergleichsweise höher belastbar ist.

Vorzugsweise ist an zumindest einer Seite des verlängerten Schenkels ein Führungsabschnitt vorgesehen, womit der für die Aufnahme der zweiten Achse verlängerte Schenkel im entsprechenden Bereich eine erhöhte Steifigkeit aufweist. Dieses Ladungssicherungssystem ist bei weiterhin geringer Materialdicke und damit geringem Gewicht höher belastbar als bekannte Systeme. Als weiteren Vorteil erleichtert der zumindest eine Führungsabschnitt das Aufwickeln des Zurrgurtes, da er diesen beim Aufwickeln zumindest entlang einer Seite führt. Der zumindest eine Führungsabschnitt ist an einer der Seiten des verlängerten Schenkels vorgesehen, welche sich ausgehend von der ersten Achse in Richtung des freien Endes des verlängerten Schenkels erstreckt.

Vorteilhaft ist der zumindest eine Führungsabschnitt einstückig mit dem verlängerten Schenkel ausgeführt, so dass der verlängerte Schenkel und somit die Ratschenvorrichtung einfach herstellbar ist.

Bevorzugt ist an beiden Seiten des verlängerten Schenkels jeweils ein Führungsabschnitt vorgesehen, so dass dieser Schenkel beidseitig verstärkt ist und somit trotz der zwischen den Führungsabschnitten liegenden Aufwickeleinrichtung eine hohe Steifigkeit aufweist. Der verlängerte Schenkel lässt sich mit einer geringen Materialstärke und, daraus resultierend, mit einem geringen Gewicht fertigen. Des Weiteren wird das Aufwickeln des Zurrgurtes aufgrund der beidseitigen Führung des Zurrgurtes zwischen den Führungsabschnitten verbessert. Vorteilhaft sind die einander gegenüberliegenden Führungsabschnitte symmetrisch zueinander beziehungsweise bezogen auf den verlängerten Schenkel ausgebildet. Weiter vorteilhaft verlaufen die Führungsabschnitte parallel zueinander, wobei zwischen diesen ein Aufnahmeraum für den aufgewickelten Zurrgurt.

Vorzugsweise weist der zumindest eine Führungsabschnitt eine Höhe auf, welche in Richtung der zweiten Achse hin zunimmt. Diese Höhe wird vorteilhaft in die gleiche Richtung wie die im Gebrauch des Ladungssicherungssystems zum freien Ende des verlängerten Schenkels hin zunehmende Biegebelastung vergrössert.

Vorteilhaft nimmt die Höhe des zumindest einen Führungsabschnitts kontinuierlich zu, womit ein vorteilhafter Kraftverlauf in dem Führungsabschnitt und somit in dem verlängerten Schenkel gewährleistet ist. Zudem ist dadurch auch sichergestellt, dass die beiden Schenkel soweit zusammenklappbar sind, um beispielsweise den aufgewickelten Zurrgurt in der Aufwickelstellung zu fixieren.

Bevorzugt ist der zumindest eine Führungsabschnitt als Kreissegment und besonders vorteilhaft als Viertelkreissegment ausgebildet, neben einem vorteilhaften Kraftverlauf innerhalb des zumindest einen Führungsabschnitts wird zudem eine sichere Führung des Zurrgurtes bei dessen Aufwicklung wie auch bei dessen Abwicklung gewährleistet.

Vorteilhaft entspricht der Radius der gebogenen Aussenkante des zumindest einen Führungsabschnitts dem 0.9-fachen bis 1.2-fachen und besonders vorteilhaft dem 1.0-fachen bis 1.1-fachen des Radius des vollständig aufgerollten Zurrgurtes, so dass neben der sicheren Führung des Zurrgurtes bei dessen Aufwicklung wie auch bei dessen Abwicklung der Zurrgurt im aufgewickelten Zustand vor einem unbeabsichtigten Abwickeln, beispielsweise während des verstauten Zustandes, geschützt ist.

Vorzugsweise ist an dem zumindest einen Führungsabschnitt zumindest ein Versteifungselement vorgesehen, was zu einer weiteren Verbesserung der Steifigkeit der Anordnung bei weiterhin geringer Materialdicke und damit leichter Bauweise führt.

Vorteilhaft ist das zumindest eine Versteifungselement einstückig mit dem entsprechenden Führungsabschnitt ausgeführt, so dass der verlängerte Schenkel und somit die Ratschenvorrichtung einfach herstellbar ist. Das zumindest eine Versteifungselement ist beispielsweise eine in dem entsprechenden Führungsabschnitt vorgesehene Sicke.

Bevorzugt ist an einem freien Endabschnitt des zumindest einen Führungsabschnitts zumindest ein Führungselement vorgesehen, dessen freies Ende in Bezug auf den Zurrgurt vorteilhaft von diesem abgewandt ist. Damit wird insbesondere ein gleichmässiges Aufwickeln des Zurrgurtes vereinfacht. Des Weiteren steift das zumindest eine Führungselement den entsprechenden freien Endabschnitt des entsprechenden Führungsabschnitts zusätzlich aus, womit die Materialdicke bei Beibehaltung der gewünschten Belastbarkeit zusätzlich reduziert werden kann. Vorteilhaft ist das zumindest eine Führungselement an dem Endabschnitt des entsprechenden Führungsabschnitts vorgesehen, der in Richtung des freien Endes des verlängerten Schenkels ausgerichtet ist.

Sind zwei einander gegenüberliegende Führungsabschnitte an dem verlängerten Schenkel angeordnet, so wird vorteilhaft an deren freien Endabschnitten jeweils zumindest ein Führungselement vorgesehen. Die freien Enden dieser Führungselemente sind vorteilhaft einander abgewandt, so dass eine trichterförmige Einführöffnung für den Zurrgurt zwischen den Führungsabschnitten geschaffen ist.

Vorteilhaft ist das zumindest eine Führungselement einstückig mit dem entsprechenden Führungsabschnitt ausgeführt, so dass der verlängerte Schenkel und somit die Ratschenvorrichtung einfach herstellbar ist.

Vorzugsweise ist an dem zumindest einen Führungsabschnitt zumindest eine Ausnehmung vorgesehen, womit sich das Gewicht des verlängerten Schenkels und somit der Ratschenvorrichtung reduzieren lässt. Die zumindest eine Ausnehmung wird vorteilhaft in den Bereichen des zumindest einen Führungsabschnitts vorgesehen, welche unter den verschiedenen Belastungszuständen keine oder geringen Kräften beziehungsweise Belastungen ausgesetzt sind. Vorteilhaft werden an einem Führungsabschnitt mehrere Ausnehmungen vorgesehen, so dass zwischen diesen Stege zur Kraftübertragung verbleiben.

Bevorzugt ist der Zurrgurt mit einer Massband-Markierung versehen, so dass der Zurrgurt neben der Funktion der Ladungssicherung auch als Massband zum Messen, beispielsweise der Abmessungen einer Ladung, dienen kann. Dadurch wird die Flexibilität der Anwendung des erfindungsgemässen Ladungssicherungssystem noch weiter erhöht.

Wenn jedoch gemäss einer anderen Ausführungsform des Ladungssicherungssystems der verlängerte Schenkel der Ratschenvorrichtung durch biegesteife Verbindung eines Schenkels der Ratsche für den Zurrgurt mit einer Aufwickelvorrichtung für einen Zurrgurt gebildet ist, die entsprechend einem der vorhergehenden Absätze ausgebildet ist, können je nach Bedarf unterschiedlich lange und/oder unterschiedlich belastbare Zurrgurte mit ein und derselben Ratschenvorrichtung verbunden werden. Damit erhöht sich die Anwendungsflexibilität des erfindungsgemässen Ladungssicherungssystem nochmals.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine Ausführungsform eines erfindungsgemässen Ladungssicherungssystems in perspektivischer Ansicht, mit aufgerolltem Zurrgurt,
- Fig. 2: die Ratschenvorrichtung der Ausführungsform der Fig.1 mit abgerolltem Zurrgurt,
- Fig. 3: in vergrössertem Massstab den verlängerten Schenkel der Ratschenvorrichtung der Ausführungsform der Fig. 1 und Fig. 2, mit abgerolltem Zurrgurt,
- Fig. 4: das Ladungssicherungssystem in perspektivischer Ansicht, mit aufgerolltem und gesichertem Zurrgurt,
- Fig. 5: eine Variante des Ladungssicherungssystems in perspektivischer Ansicht, mit abgerolltem Zurrgurt, und
- Fig. 6: eine Ratschenvorrichtung mit einer Variante der Ausbildung der zweiten Achse in perspektivischer Ansicht.

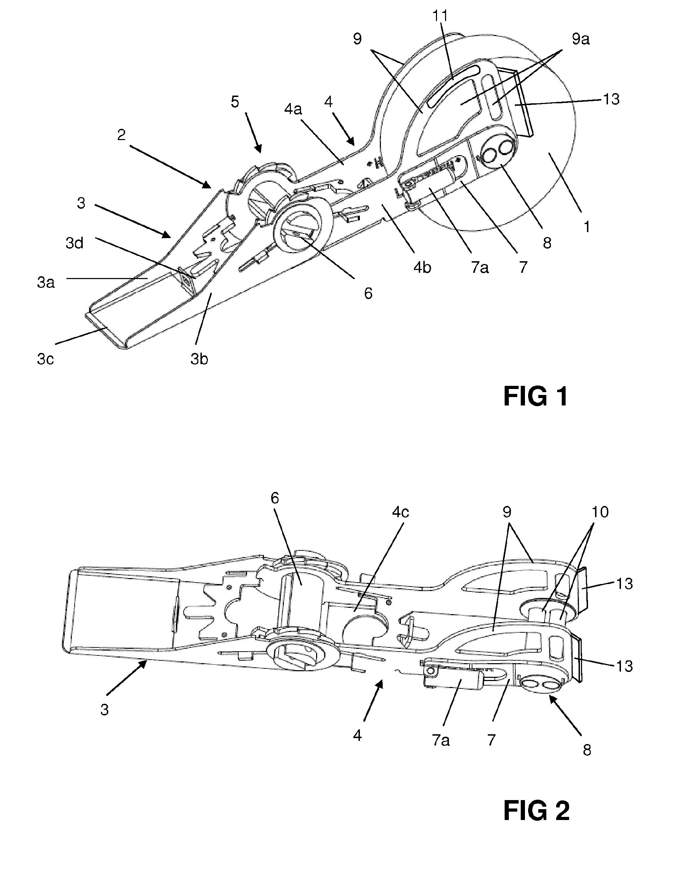

Fig. 1 zeigt ein Ladungssicherungssystem mit einem - hier aufgerollt dargestellten - Zurrgurt 1 und einer Ratschenvorrichtung 2 zum Spannen des Zurrgurtes 1, wenn dieser z. B. um eine zu sichernde Ladung herumgelegt wurde.

Die Ratschenvorrichtung 2 weist zwei Schenkel 3, 4 auf, welche aus der in Fig. 1 dargestellten gestreckten Stellung in eine zusammengeklappte Stellung verschwenkt werden können. Eine im Verbindungsbereich 5 der Schenkel 3, 4 vorgesehene erste Achse 6 wird dabei mitgedreht. Beim Wiederaufklappen der Schenkel 3, 4 in die gestreckte oder eine nahezu gestreckte Stellung bleibt die erste Achse 6 drehfest gesperrt, so dass ein zumindest temporär mit der ersten Achse 6 verbundener Zurrgurt 1 durch wiederholtes Auf- und Zuklappen der Schenkel 3, 4 auf die erste Achse 6 aufgewickelt und damit um die Ladung gespannt wird, um welche der Zurrgurt 1 vorgängig herumgeführt wurde.

Die Schenkel 3, 4 sind vorzugsweise im Querschnitt im Wesentlichen U-förmig ausgebildet und umfassen jeweils zwei parallele Äste 3a, 3b bzw. 4a, 4b, die entlang ihrer Längserstreckung beispielsweise durch Querstege 3c, 3d bzw. 4c miteinander verbunden sind.

Der Schenkel 4 bzw. die Äste 4a, 4b sind gegenüber dem anderen Schenkel 3 verlängert ausgeführt. Der Schenkel 4 weist am der ersten Achse 6 gegenüberliegenden Endbereich eine mittels einer Kurbel 7 mit vorzugsweise einklappbarem Handgriff 7a drehbare zweite Achse 8 zur Aufnahme eines Endes des Zurrgurtes 1 auf. Der Handgriff 7a ist vorteilhaft derart ausgebildet, dass in seinem eingeklappten Zustand ein aufgewickelter Zurrgurt 1 fixiert und somit vor einem unbeabsichtigten Abwickeln gesichert ist.

An zumindest einer Seite - gesehen in Bezug auf die die Achsen 6, 8 der Ratschenvorrichtung 2 enthaltende Ebene - zumindest eines, vorzugsweise beider Äste 4a, 4b des verlängerten Schenkels 4 ist ein Führungsabschnitt 9 vorgesehen. Dieser erhöht einerseits die Steifigkeit dieses Schenkels 4 und erleichtert als Führung für den Zurrgurt 1 dessen Aufwickeln. Um dabei Gewicht und Material zu sparen, können Ausnehmungen 9a vorgesehen sein. Vorzugsweise nimmt die Höhe der Führungsabschnitte 9, d.h. die Höhe der Führung über der besagten Ebene der beiden Achsen 6, 8, in Richtung auf die zweite Achse 8 hin kontinuierlich zu. Die Führungsabschnitte 9 sind in diesem Ausführungsbeispiel jeweils als Viertelkreissegment ausgeführt, wobei der Radius des Kreissegmentes im Wesentlichen dem Radius entspricht, den ein vollständig auf der Achse 8 aufgerollter Zurrgurt 1 aufweist. Mit anderen Worten weist der verlängerte Schenkel 4 eine im Querschnitt im Wesentlichen U-förmige Ausgestaltung auf, wobei die Länge der Seitenabschnitte des U in Richtung des freien Endes jeweils zunimmt. Im Bereich der Aufwickelzone für den Zurrgurt 1 weist der verlängerte Schenkel 4 im Querschnitt eine theoretisch U-förmige Ausgestaltung ohne die Seitenwände verbindende Basis auf.

Der Führungsabschnitt 9 ist, was sowohl die mechanische Festigkeit als auch die Herstellung vereinfacht, einstückig mit dem verlängerten Schenkel 4 bzw. dem oder den Ästen 4a, 4b ausgeführt und kann zur weiteren Versteifung auch vorzugsweise einstückig mit Versteifungselementen 11, z. B. in Form einer Sicke, versehen sein.

Wie in Fig. 2 dargestellt ist, besteht die zweite, drehbare Achse 8 aus zwei parallelen Bolzen 10, die vorzugsweise einstückig mit den beiden in den Ästen 4a, 4b drehbaren Endstücken ausgeführt ist, von welchen eines die Kurbel 7 mit ihrem Handgriff 7a trägt. Die Bolzen 10 drehen beim Auf- oder beim Abwickeln des Zurrgurtes 1 um eine gemeinsame Drehachse 12.

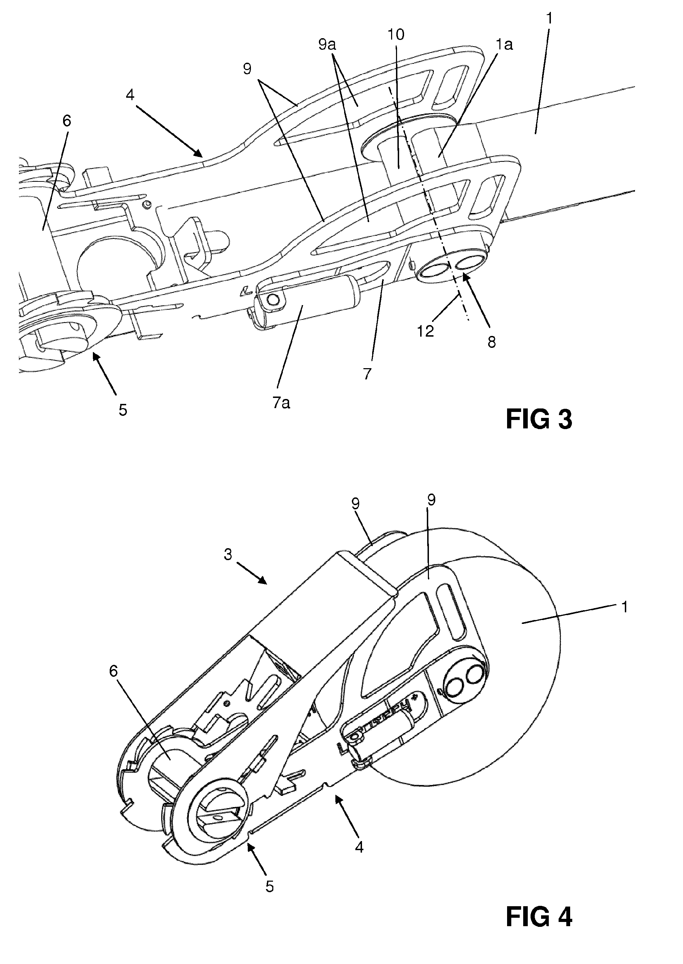

Fig. 3 zeigt die vorteilhafte Ausführungsform der Erfindung, bei welcher der Zurrgurt 1 mit einer Schlaufe 1 a an einem der Bolzen 10 der zweiten Achse 8 befestigt ist. Dadurch kann bei geringen Materialquerschnitten für die Bolzen 10 und damit leichter Bauweise eine hohe Belastbarkeit gewährleistet werden. Selbstverständlich sind auch andere Möglichkeiten der unverlierbaren Befestigung des Zurrgurtes 1 an einem der Bolzen 10 denkbar. Wie hier dargestellt, ist der Handgriff 7a der Kurbel 7 beim vollständig abgewickelten Zugband entgegen der Wirkrichtung der Zugkraft ausgerichtet. Dadurch wird einerseits eine Behinderung des Verspannvorgangs durch den Handgriff 7a verhindert und das durch das Ladungssicherungssystem zu sichernde Gut beziehungsweise die zu sichernde Ladung vor Beschädigungen geschützt.

Fig. 4 zeigt den Zustand des Ladungssicherungssystems mit aufgewickeltem Zurrgurt 1, der durch den umgeklappten und an diesem anliegenden Schenkel 3 vor einem unbeabsichtigten Abrollen gesichert ist. Vorteilhaft ist des Weiteren eine auf die zweite Achse wirkende Arrietiervorrichtung vorgesehen, welche zusätzlich ein Abrollen des aufgewickelten Zurrgurtes 1 verhindert.

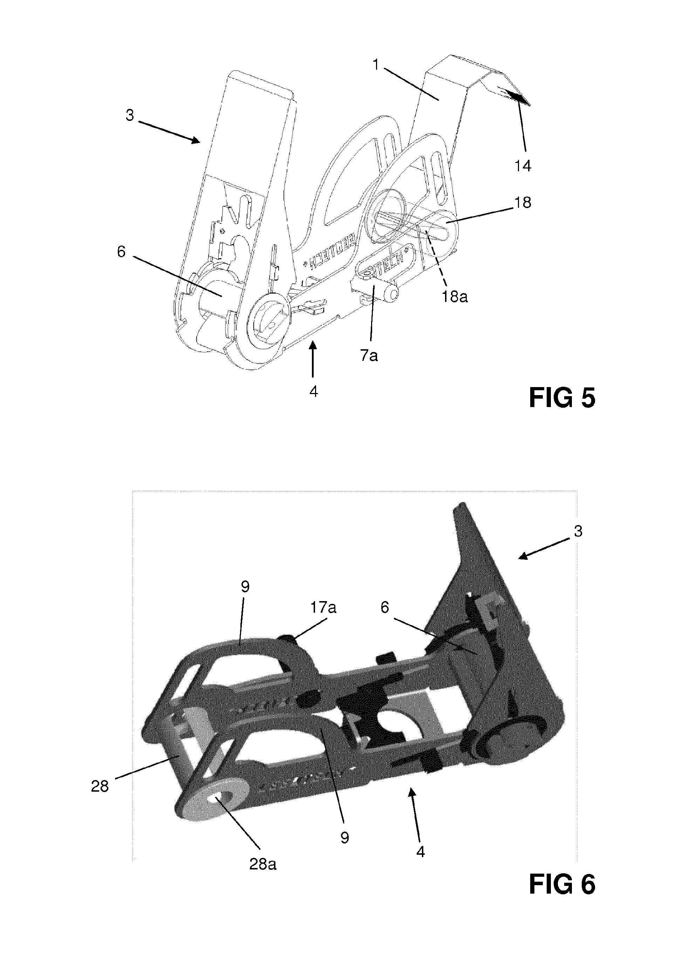

Bei dem in der Fig. 5 gezeigten Ladungssicherungssystem ist der fest mit der zweiten Achse 8 verbundene Zurrgurt 1 mit einer Massband-Markierung 14 versehen. Eine Massband-Markierung 14 wird vorteilhaft auf beiden Seiten des Zurrgurtes 1 vorgesehen. Weiter ist hier die zweite Achse 18 als Vollwelle mit einem Schlitz 18a ausgebildet. Der Schlitz 18a ermöglicht eine einfache Festlegung des Zurrgurtes 1.

Bei der Variante gemäss Fig. 6 ist der Handgriff 17a relativ zu dem Aufnahmebereich für den Zurrgurt zwischen den Führungsabschnitten 9 des zweiten Schenkels 4 verschieblich angeordnet. Nach dem Aufwickeln des Zurrgurtes wird der Handgriff 17a in Richtung des aufgewickelten Zurrgurtes verschoben, so dass dieser sich nicht unbeabsichtigt abwickeln kann.

Alternativ ist der Handgriff verschwenkbar, wie dies beispielsweise in den Figuren 1 bis 4 gezeigt ist, und im Schenkel 4 ist eine entsprechend der Einschwenkposition des Hangriffs vorgesehene Ausnehmung angeordnet, so dass im umgeklappten Zustand der Handgriff auf den zumindest teilweise aufgewickelten Zurrgurt wird und diesen fixiert.

Damit ein Ladungssicherungssystem auch bei einem teilweise abgerollten Zurrgurt 1 zum Verspannen desselben verwendet werden kann, ist vorteilhaft eine Arretiereinrichtung zur drehfesten Blockierung der entsprechenden zweiten Achse vorgesehen. Die Arretiereinrichtung ist beispielsweise als Bolzen oder Klemme ausgebildet, welche beispielsweise in eine Ausnehmung an der zweiten Welle eingreift.

Eine bevorzugte Ausführungsform der Erfindung sieht vor, dass - wie dies auch in den Figuren 1 bis 6 dargestellt ist - der verlängerte Schenkel 4 der Ratschenvorrichtung 2 zumindest zwischen der sperrbaren Achse 6 und der zweiten Achse 8 einstückig ausgeführt ist. Natürlich ist aber auch eine Ausführungsform des Systems möglich, bei welcher der verlängerte Schenkel 4 durch biegesteife Verbindung eines dann kürzeren Schenkels der Ratschenvorrichtung 2 für den Zurrgurt 1 mit einer vorerst separaten und vorzugsweise auch wieder abnehmbaren Aufwickelvorrichtung für einen Zurrgurt 1 gebildet ist. Diese Aufwickelvorrichtung ist vorzugsweise gleichartig wie die oben beschriebene verlängerte Variante des Schenkels 4 ausgeführt, d.h. mit zumindest einem Führungsabschnitt 9, einer Achse 8 mit zwei parallelen Bolzen 10 und einer Kurbel 7, mit der ein an einem der Bolzen 10 unverlierbar angebrachter Zurrgurt 1 auf- oder auch abgewickelt werden kann.

### Bezugszeichenliste

- 1: Zurrgurt
- 1 a: Schlaufe von 1
- 2: Ratschenvorrichtung
- 3: Schenkel
- 3a, 3b: Äste des Schenkels 3
- 3c, 3d: Stege zwischen den Ästen 3a, 3b
- 4: Verlängerter Schenkel
- 4a, 4b: Äste des Schenkels 4
- 4c: Steg zwischen den Ästen 4a, 4b
- 5: Verbindungsbereich von 3 und 4
- 6: erste Achse
- 7: Kurbel für 8
- 7a: Einklappbarer Handgriff von 7
- 8: zweite Achse
- 9: Führungsabschnitt
- 9a: Ausnehmung in 9
- 10: Bolzen
- 11: Versteifungselement von 9
- 12: Drehachse von 10
- 13: Führungselement bei 9
- 14: Massband-Markierung

- 17a: verschiebbarer Handgriff von 7
- 18: zweite Achse
- 18a: Schlitz in 18

- 28: zweite Achse
- 28a: Schlitz von 28

## Patentansprüche

1. Ladungssicherungssystem umfassend zumindest einen Zurrgurt (1) und eine Ratschenvorrichtung (2) zum Spannen des Zurrgurtes (1), mit zwei gegeneinander um eine den zu spannenden Zurrgurt (1) aufnehmende, in einer Drehrichtung sperrbare erste Achse (6) verschwenkbaren Schenkeln (3, 4), wobei einer der Schenkel (4) gegenüber dem anderen Schenkel (3) verlängert ausgeführt ist und wobei am Ende des verlängerten Schenkels (4) eine mittels einer Kurbel (7) drehbare zweite Achse (8; 18; 28) zum Aufwickeln des Zurrgurtes (1) vorgesehen ist, **dadurch gekennzeichnet, dass** der Zurrgurt (1) mit einem Ende unverlierbar an der zweiten Achse (8; 18; 28) des verlängerten Schenkels (4) festgelegt ist.

2. System nach Anspruch 1, **dadurch gekennzeichnet, dass** die zweite Achse (8; 18; 28) aus zwei parallelen Bolzen (10) besteht, welche um eine gemeinsame, zwischen diesen verlaufende Drehachse (12) drehbar sind, wobei der Zurrgurt (1), vorzugsweise mit einer Schlaufe (1 a), an zumindest einem der Bolzen (10) befestigt ist.

3. System nach Anspruch 1 oder 2, **dadurch gekennzeichnet, dass** eine Arretiereinrichtung zur Arretierung der zweiten Achse (8; 18; 28) vorgesehen ist.

4. System nach einem der Ansprüche 1 bis 3, **dadurch gekennzeichnet, dass** der verlängerte Schenkel (4) der Ratschenvorrichtung (2) zumindest zwischen der sperrbaren Achse (6) und der zweiten Achse (8; 18; 28) einstückig ausgeführt ist.

5. System nach einem der Ansprüche 1 bis 4, **dadurch gekennzeichnet, dass** an zumindest einer Seite des verlängerten Schenkels (4) ein, vorteilhaft einstückig mit dem verlängerten Schenkel (4) ausgeführter Führungsabschnitt (9) vorgesehen ist.

6. System nach Anspruch 5, **dadurch gekennzeichnet, dass** an beiden Seiten des verlängerten Schenkels (4) jeweils ein Führungsabschnitt (9) vorgesehen ist.

7. System nach Anspruch 5 oder 6, **dadurch gekennzeichnet, dass** der zumindest eine Führungsabschnitt (9) eine Höhe aufweist, welche in Richtung der zweiten Achse (8; 18; 28) hin vorzugsweise kontinuierlich zunimmt.

8. System nach einem der Ansprüche 5 bis 7, **dadurch gekennzeichnet, dass** der zumindest eine Führungsabschnitt (9) als Kreissegment, vorzugsweise als Viertelkreissegment ausgebildet ist, wobei der Radius der gebogenen Aussenkante des zumindest einen Führungsabschnitts (9) vorteilhaft dem 0.9-fachen bis 1.2-fachen, besonders vorteilhaft dem 1.0-fachen bis 1.1-fachen, des Radius des vollständig aufgerollten Zurrgurtes (1) entspricht.

9. System nach einem der Ansprüche 5 bis 8, **dadurch gekennzeichnet, dass** an dem zumindest einen Führungsabschnitt (9) zumindest ein, vorzugsweise einstückig mit dem zumindest einen Führungsabschnitt (9) ausgebildetes Versteifungselement (11) vorgesehen ist.

10. System nach einem der Ansprüche 5 bis 9, **dadurch gekennzeichnet, dass** an einem freien Ende des zumindest einen Führungsabschnitts (9) zumindest ein, vorzugsweise einstückig mit dem zumindest einen Führungsabschnitt (9) ausgebildetes Führungselement (13) vorgesehen ist.

11. System nach einem der Ansprüche 5 bis 10, **dadurch gekennzeichnet, dass** an dem zumindest einen Führungsabschnitt (9) zumindest eine Ausnehmung (9a) vorgesehen ist.

12. System nach einem der Ansprüche 1 bis 11, **dadurch gekennzeichnet, dass** der Zurrgurt (1) mit einer Massband-Markierung versehen ist.

13. System nach einem der Ansprüche 1 bis 12, **dadurch gekennzeichnet, dass** der verlängerte Schenkel (4) der Ratschenvorrichtung (2) durch biegesteife Verbindung eines Schenkels der Ratschenvorrichtung (2) für den Zurrgurt (1) mit einer Aufwickelvorrichtung für einen Zurrgurt (1) gebildet ist, die entsprechend den Merkmalen eines der Ansprüche 1 bis 12 ausgebildet ist.
